# FASCICULE DE BREVET EUROPEEN

(11) **EP 2 202 942 B1**
(45) Date de publication et mention de la délivrance du brevet: **07.02.2018**
(21) Numéro de dépôt: 09179806.6
(22) Date de dépôt: 18.12.2009
(51) Int. Cl.: H04L 29/08, H04W 4/02, G06Q 10/06, G06Q 50/28, G08B 21/02

(54) **Procéde de surveillance de groupe**
Verfahren zur Gruppenüberwachung
Group monitoring method

(30) Priorité: 24.12.2008 FR 0859080
(43) Date de publication de la demande: 30.06.2010
(73) Titulaire: Orange, 75015 Paris (FR)
(72) Inventeur: Haute, Philippe, 22590, TREGOMEUR (FR); Ouchia, Mehdi, 29400, LANDIVISIAU (FR)
(74) Mandataire: Vidon Brevets & Stratégie

(56) Documents cités:
- EP-A- 1 564 937
- WO-A-99/40740
- WO-A-03/079773
- WO-A2-2008/029164
- DE-A1- 10 063 403
- FR-A1- 2 864 659
- US-A1- 2005 143 096
- US-A1- 2007 299 946
- US-A1- 2008 068 157
- BARONTI ET AL: "Wireless sensor networks: A survey on the state of the art and the 802.15.4 and ZigBee standards" COMPUTER COMMUNICATIONS, ELSEVIER SCIENCE PUBLISHERS BV, AMSTERDAM, NL, vol. 30, no. 7, 8 avril 2007 (2007-04-08), pages 1655-1695, XP022024796 ISSN: 0140-3664

## Description

### 1 DOMAINE DE L'INVENTION

La présente invention se rapporte au domaine de la gestion des biens et des personnes.

La présente invention se rapporte plus particulièrement à un procédé de surveillance de biens ou de personnes. Dans de nombreuses situations, des biens ou des personnes se trouvent regroupées au même moment et au même endroit. Ceci est par exemple le cas lors de visites en groupe ou de déplacements de marchandises. Généralement une personne désignée à cet effet assure une cohérence au groupe ainsi qu'une surveillance des entités qui le composent. L'invention propose une nouvelle méthode de surveillance des entités qui composent un groupe.

### 2 SOLUTIONS DE L'ART ANTERIEUR

### 2.1 Art antérieur

Comme cela a déjà été évoqué, il est fréquent que différentes personnes se retrouvent au même endroit à un même moment. Ceci est particulièrement le cas lors de visites en groupe par exemple de monuments ou de musées qui reçoivent de nombreux visiteurs à des heures d'affluence. Dans ce genre de situation les meneurs de groupe qui sont généralement des guides ou des professeurs lorsqu'il s'agit par exemple de sorties scolaires sont obligés de se tenir continuellement en garde et de vérifier que les personnes qui les accompagnent sont toujours présentes.

Pour pallier ce problème, il est courant que les professeurs ou les responsables de groupe notent de manière scrupuleuse les numéros de téléphone portable des personnes qui les accompagnent.

Ainsi, en cas de disparition d'un membre du groupe, il est plus aisé de retrouver cette personne en l'appelant sur son téléphone portable.

On note cependant qu'un tel mécanisme ne permet que de constater la perte d'une personne ou d'un bien et non de prévenir cette perte. En effet lorsqu'il est nécessaire que la personne en question soit recherchée, c'est qu'elle est déjà trop éloignée du groupe. On n'empêche donc pas les personnes de s'éloigner et il peut se passer un long moment entre la disparition et la constatation de cette disparition par la personne responsable.

Il en va de même pour les biens. Il est possible, comme cela a déjà été proposé à de nombreuses reprises, de munir des biens à surveiller de dispositifs tels que des puces électroniques, qui vont être utilisés pour rechercher les biens qui peuvent avoir été perdus à un moment donné, par exemple lors de leurs transports.

Pour pallier ce problème, des dispositifs de mesures de distance entre deux utilisateurs ont été proposés. Ces dispositifs permettent de configurer une distance d'éloignement entre deux utilisateurs. Lorsque cette distance d'éloignement est atteinte, les dispositifs émettent un signal sonore et/ou un signal visuel permettant d'alerter au moins un des utilisateurs sur le dépassement d'une distance qui les sépare. De tels dispositifs se présentent par exemple sous la forme de porte-clés, de montre, ou peuvent encore être inclus au sein d'un téléphone portable. Ils assurent donc à deux utilisateurs qu'ils ne peuvent se perdre. Ces dispositifs peuvent par exemple être disposés d'une part sur un animal de compagnie et sur son propriétaire. Il s'agit typiquement du cas présenté dans le brevet GB2409084. de même que dans la demande US2005/143096 A1 Cette méthode présente cependant des limites. En effet le dispositif présenté dans ce brevet ne permet que de détecter l'éloignement entre une personne et une autre qui dispose d'un dispositif adéquat. Ainsi, l'utilisation du dispositif de l'antérieur tel que décrit dans le brevet précité n'est possible qu'entre deux utilisateurs. Or, lorsque de nombreux utilisateurs sont réunis du sein d'un même groupe, il est primordial que tous les membres du groupe puissent être surveillés. Ceci est également le cas lors de la surveillance de biens tels que les marchandises qui seraient par exemple déchargées d'un camion à un autre. Il n'est donc pas envisageable, de fournir un utilisateur autant de dispositifs de surveillance qu'il y a de bien ou de personnes à surveiller. Des procédés de relais d'information dans des réseaux ad-hoc sont connus des demandes de brevets EP 1 564 937 A2, FR 2 864 659 A1 et WO2008/029164 A2; le protocole de réseau ad-hoc dit de « Zigbee » reposant sur la norme « IEEE 802.15.4 » est décrit dans l'article de Paolo Baronti et al "Wireless sensor networks: A survey on the state of the art and the 802.15.4 and ZigBee standards" publié dans le volume 30 N° 7 de Computer Communcations chez Elsevier Science.

### 3 RESUME DE L'INVENTION

L'invention ne présente pas ces inconvénients de l'art antérieur. En effet, l'invention concerne un procédé de surveillance d'un ensemble d'entités formant un groupe, ledit groupe comprenant au moins une entité dite coordinatrice. L'invention est définie par la revendication de procédé 1, la revendication de système 8 et la revendication de produit programme d'ordinateur 9. Selon l'invention, un tel procédé comprend au moins une étape de transmission par au moins une première entité vers au moins une deuxième entité dudit groupe, d'une requête d'obtention d'une information de présence, et une étape de retransmission de ladite information de présence vers l'entité coordinatrice.

Ainsi, l'invention assure que chaque membre du groupe peut être surveillé indépendamment de sa position et de son éloignement vis-à-vis du coordinateur c'est-à-dire de l'entité du groupe qui est chargée de veiller à ce qu'aucune autre entité ne soit considérée comme ne faisant plus partie du groupe. Pour ce faire, l'invention utilise la distance d'éloignement vis-à-vis de chaque membre du groupe pour déterminer si une entité est toujours présente dans le groupe. Ainsi, chaque entité dudit groupe participe à la surveillance des autres entités dudit groupe qui sont trop éloignées de ladite entité coordinatrice pour recevoir ladite requête d'obtention de ladite information de présence.

Ainsi, une entité peut être fortement éloignée du coordinateur tout en étant toujours dans le groupe. L'invention permet ainsi de s'adapter à de nombreuses topologies de groupes. Il n'est donc plus nécessaire que les groupes soient formés de manière compacte autour de l'entité coordinatrice.

Ceci est un grand avantage, puisque le procédé de l'invention est adapté aux conditions réelles de déplacement des groupes. En effet, les entités qui composent un groupe se déplacent rarement à la même vitesse. La topologie du groupe évolue donc grandement au cours de son déplacement. L'invention permet de s'adapter à cette évolution.

Selon une caractéristique particulière de l'invention, ledit procédé comprend en outre une étape de détection d'une absence de réponse de ladite deuxième entité par ladite entité coordinatrice.

Ainsi, lorsque l'entité coordinatrice ne reçoit pas de réponse aux requêtes qu'elle transmet, elle est à même de déterminer qu'une entité dont elle attendait une réponse ne fait plus partie du groupe. Ainsi, l'entité coordinatrice détermine de manière simple et rapide si une entité du groupe disparaît. Dans un mode de réalisation de l'invention cette détection est réalisée en mettant en oeuvre un cycle d'interrogation. Un cycle d'interrogation comprend un nombre prédéterminé d'émissions de requêtes d'obtention d'informations de présence. Si au bout d'un cycle d'interrogation une entité n'a répondu à aucune requête d'obtention d'informations présence, cette entité est considérée comme ne faisant plus partie du groupe.

Selon un mode de réalisation particulier de l'invention, ledit procédé comprend :
- une phase de constitution dudit groupe au cours de laquelle chaque entité reçoit de la part de ladite entité coordinatrice un identifiant d'entité ;
- une phase de surveillance desdites entités dudit groupe comprenant :
   - une étape d'émission de la part de ladite entité coordinatrice, de ladite requête d'obtention d'informations de présence à destination de ladite deuxième entité ;
   - une étape de transmission, de la part de ladite première entité, à destination de ladite deuxième entité, de ladite requête obtention d'informations de présence, lorsque ladite deuxième entité est à portée d'émission de ladite première entité.

Selon un mode de réalisation particulier de l'invention, ladite phase de surveillance comprend en outre :
- une étape de transmission, par ladite au moins une deuxième entité à destination de ladite première entité, d'une réponse à ladite notification comprenant ledit identifiant d'entité ;
- et en ce que ladite étape de retransmission de ladite au moins une réponse précédemment reçue à ladite entité coordinatrice est réalisée par ladite première entité.

Ainsi, l'invention permet de ne pas multiplier les échanges de requête et de réponse entre les entités. La gestion globale du procédé de surveillance en est grandement facilitée puisque la première entité qui transmet une requête à une deuxième entité est celle qui reçoit la réponse. Si une troisième entité transmet également la requête d'obtention d'information de présence, cette transmission sera ignorée par la deuxième entité, car ne provenant pas de l'entité qui a effectué la transmission à l'origine.

Selon une caractéristique particulière de l'invention, ladite étape d'émission de ladite phase de surveillance est mise en oeuvre à intervalles réguliers prédéterminés.

Selon un mode de réalisation particulier de l'invention, que une entité dudit groupe est considérée comme ne faisant plus partie dudit groupe lorsqu'elle n'a pas transmis un nombre de réponses prédéterminé.

Selon une caractéristique particulière de l'invention, lesdites entités composant ledit groupe sont des utilisateurs disposant d'un terminal de communication et en ce que lesdits terminaux de communications sont aptes à échanger lesdites requêtes d'obtention d'information de présence et lesdites réponses associées.

Selon un mode de réalisation particulier de l'invention, lorsqu'une entité dudit groupe est considérée comme ne faisant plus partie dudit groupe, ledit procédé comprend une étape de déclenchement d'un appel à destination du terminal de communication de ladite entité dudit groupe.

Dans un mode de réalisation alternatif de l'invention, le procédé de surveillance comprend une étape de détermination de ladite topologie dudit groupe.

Dans un mode alternatif de réalisation de l'invention, le procédé de surveillance comprend en outre, une étape d'affichage, sur ledit terminal dudit coordinateur, d'une information représentative de ladite topologie préalablement déterminée.

Ainsi, l'invention permet d'avertir le coordinateur de la topologie du groupe qu'il est supposé surveiller. Le coordinateur est donc toujours à même de connaître la représentation de son groupe. Il lui est ainsi plus facile, notamment dans des conditions de densité de population importante, d'avoir une idée précise de la position des membres de son groupe.

En d'autres termes, lorsque le terminal de coordinateur est muni d'un écran, il est possible d'afficher une carte de représentation du groupe sur cet écran.

Selon une caractéristique particulière de l'invention, une information représentative de ladite topologie préalablement déterminée est transmise aux dites entités dudit groupe.

Ainsi, toutes les entités qui composent le groupe, sont à même de connaître leur position et leur éloignement vis-à-vis des membres qui composent le groupe.

L'invention concerne également un système de surveillance d'un ensemble d'entités formant un groupe, ledit groupe comprenant au moins une entité dite coordinatrice, caractérisé en ce qu'il comprend des moyens de transmission par au moins une première entité vers au moins une deuxième entité dudit groupe, d'une requête d'obtention d'une information de présence, et des moyens de retransmission de ladite information de présence vers l'entité coordinatrice.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de surveillance tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un réseau maillé représentatif d'un groupe comprenant une entité coordinatrice ;
- la figure 2 illustre schématiquement la pile de protocole « ZigBee » ;
- la figure 3 illustre un cas d'éloignement d'une entité du groupe ;
- la figure 4 illustre un dispositif de surveillance inclus dans le système de l'invention.

### 5 DESCRIPTION DETAILLEE DE L'INVENTION

### 5.1 Rappel du principe de l'invention

L'invention repose sur une prise en charge d'un groupe d'utilisateurs ou de biens et à la surveillance de l'éloignement de chacun des membres du groupe par rapport à un éloignement maximum à l'un quelconque des membres de ce groupe.

Pour plus de simplicité, les membres qui composent le groupe sont appelés entités.

Ainsi, à la différence des techniques de l'art antérieur, il n'est pas nécessaire qu'un coordinateur, c'est-à-dire une personne qui aura été désignée comme étant le responsable des membres du groupe, soit équipé de nombreux dispositifs (un par membre du groupe) qui permettent surveiller individuellement chacun des membres du groupe. Il n'est pas non plus nécessaire que chaque membre qui compose le groupe reste à une distance proche du coordinateur. L'invention permet de faire en sorte que chaque membre du groupe participe à la surveillance de chacun des autres membres. Le coordinateur, selon l'invention, est l'entité du groupe qui reçoit les notifications d'éloignement. Il n'est pas le seul à participer à la surveillance.

En effet l'invention assure qu'il suffit que chacun des membres du groupe ne soit pas éloigné de plus d'une certaine distance d'un autre membre de ce groupe pour qu'il soit considéré comme faisant toujours partie de ce groupe. Ainsi, l'invention s'adapte à toute configuration de groupe. L'invention s'adapte notamment au groupe en cours de déplacement. En effet, lorsque le groupe se déplace, chaque membre du groupe se déplace individuellement dans une direction donnée, sensiblement proche de la direction générale du groupe. En surveillant la distance par rapport à chacun des utilisateurs du groupe, l'invention assure que même si le groupe est très étiré en longueur ou adopte une configuration dans laquelle les membres du groupe sont relativement éloignés du coordinateur du groupe, le membre le plus éloigné du coordinateur sera toujours considéré comme faisant partie du groupe si la distance qui sépare le membre le plus éloigné est inférieure à une distance prédéterminée par rapport à un membre du groupe qui fait toujours partie de celui-ci.

En d'autres termes, dans l'invention, chaque membre du groupe est en charge d'une partie de la surveillance de chacun des autres membres du groupe ou à tout le moins des membres du groupe qui se trouvent éloignés de lui d'une distance inférieure à une distance prédéterminée. Ainsi, l'invention permet de s'adapter à une grande variété de topologie de groupes ainsi qu'à une grande variété de configuration des membres de ce groupe.

Par exemple, lorsqu'il s'agit de surveiller la présence d'élèves au sein d'un groupe, il suffit que chacun de ses élèves soit distant d'un autre élève d'une distance inférieure à une distance prédéterminée pour que le groupe soit effectivement considéré comme formé. Ceci est un grand avantage puisqu'il n'est plus indispensable que le groupe soit constitué autour d'un noyau formé nécessairement par le coordinateur. Le groupe peut donc évoluer naturellement (se déplacer), sans qu'une alerte soit transmise au coordinateur. On évite ainsi un effet de masse, dans lequel tous les membres du groupe sont obligés de se tenir à une distance inférieure à une distance prédéterminée du coordinateur du groupe. Les inventeurs assurent ainsi que le procédé de l'invention soit adopté de manière enthousiaste par les accompagnateurs puisqu'il évite de créer des alertes intempestives lorsque cela n'est pas nécessaire.

Dans au moins un mode de réalisation, l'invention est mise en oeuvre à l'aide d'un réseau de communication. Les informations échangées entre les terminaux qui sont connectées à ce réseau de communication sont utilisées pour mesurer la distance qui sépare les membres qui composent un groupe.

Dans un mode de réalisation spécifique de l'invention, le réseau utilisé est un réseau dit de « Zigbee » reposant sur la norme « IEEE 802.15.4 ».

Il s'agit bien entendu d'un exemple. L'invention ne saurait se limiter à l'utilisation ce réseau particulier.

Par la suite, on présente notamment le cas d'une mise en oeuvre du procédé de surveillance de l'invention à l'aide d'un réseau « Zigbee ». Il est clair cependant que l'invention ne se limite pas à cette application particulière. Ce réseau « Zigbee » est utilisé dans le domaine de la domotique. Il permet de créer un réseau dans lequel des dispositifs résidentiels sont intégrés et peuvent être pilotés indépendamment les uns des autres à l'aide d'une passerelle adéquate. Les inventeurs dans le mode de réalisation présentée ci-après ont eu l'ingénieuse idée d'utiliser ce réseau pour mettre en oeuvre le procédé de surveillance de l'invention.

### 5.2 Description d'un mode de réalisation

On présente dans ce mode de réalisation, la mise en oeuvre du procédé de gestion de l'invention à la gestion d'un groupe, tel qu'un groupe d'élèves ou un groupe de visiteurs. Dans ce mode de réalisation de l'invention, le coordinateur est par exemple un professeur en charge de la surveillance des élèves.

Lors de la mise en place de la surveillance du groupe, une interface est distribuée à chacun des membres du groupe. Cette interface est distribuée sur les terminaux mobiles des utilisateurs. Bien entendu, il est tout à fait possible que chacun des élèves membres du groupe se voit distribuer un dispositif particulier qui permet de mettre en oeuvre le procédé de l'invention.

Le coordinateur dispose d'un dispositif "maître" qui recevra une alerte à chaque fois que le lien unissant toutes les interfaces sera rompu. Par exemple, lorsque le membre le plus éloigné du coordinateur s'éloigne trop d'un membre en limite de portée. Dans ce mode de réalisation, le dispositif maître est également un terminal mobile.

A chaque alerte, le coordinateur peut ainsi attendre la reconstitution de la "grappe" pour poursuivre l'excursion. Les dispositifs choisis peuvent permettre la réception de messages de la part du coordinateur.

Dans ce mode de réalisation on utilise le réseau « Zigbee » reposant sur la norme « IEEE 802.15.4 » pour mettre en oeuvre le procédé de l'invention.

L'objectif des paragraphes suivants est de présenter les fonctions applicatives identifiées pour ce mode de réalisation de l'invention.

### 5.2.1 Initialisation du système de surveillance

Le protocole réseau « Zigbee » est utilisé dans ce mode de réalisation. Zigbee est un réseau radio à faible consommation et particulièrement stable y compris dans les environnements fortement parasités par des émissions radiofréquence. La nature de ce réseau auto adaptatif est de permettre aux données de naviguer malgré certaines barrières physiques, comme le métal ou le béton. En pratique, la portée de ce réseau est d'environ 30m.

La topologie "maillée" du réseau Zigbee se prête parfaitement à cette mise en oeuvre de l'invention. En effet, cette topologie repose sur la composition d'un réseau maillé de par la proximité des noeuds le composant. La configuration de ce réseau maillé se fait automatiquement en fonction de l'ajout ou la suppression de noeuds.

Fonctionnant en 802.15.4, ce type de réseau s'avère peu coûteux et met automatiquement en place des liaisons redondantes permettant à une même information d'emprunter différents chemins en cas de rupture de certaines liaisons.

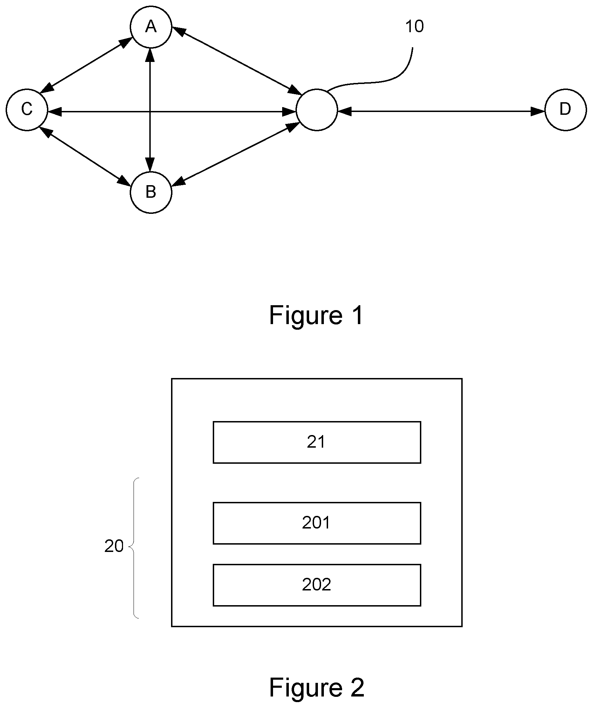

Ainsi pour l'exemple ci-dessus de réseau composé d'un coordinateur 10 et de quatre noeuds élémentaires (A, B, C, D), tel que présenté en figure 1, une information émise par le coordinateur et destinée au noeud "B" peut emprunter les chemins suivants :
- chemin direct vers "B" ;
- chemin transitant par "A" ;
- chemin transitant par "C" ;
- chemin transitant par "A" puis "C" ;
- chemin transitant par "C" puis "A".

D'autre part, dans ce contexte de sécurité de biens et de personnes, un autre intérêt de cette technologie est le facteur temps : le temps moyen nécessaire pour un noeud pour intégrer le réseau n'est en moyenne que de 30 ms.

Dans ce mode de réalisation de l'invention, chaque noeud du réseau suit l'architecture décrite en relation avec la figure 2. La couche "Zigbee Compliant Platform" (20) implémente le protocole standard IEEE 802.15.4 (201) et la pile d'interfonctionnement Zigbee (202). Cette couche est totalement indépendante de l'application cible, elle permet l'interopérabilité réseau avec d'autres composants Zigbee standards.

La couche "Application Profile" (21) implémente les fonctions de surveillance de l'invention et repose sur la couche sous-jacente pour la communication avec d'autres terminaux.

Dans ce mode de réalisation, avant chaque visite, le système doit être initialisé pour identifier le ou les module(s) maître(s) (accompagnateur dans le cas présent) et les modules esclaves (membres visiteurs du groupe). Chaque personne lance l'applicatif et configure son rôle (maître ou esclave) sur son terminal, avec la possibilité de considérer le rôle esclave configuré par défaut.

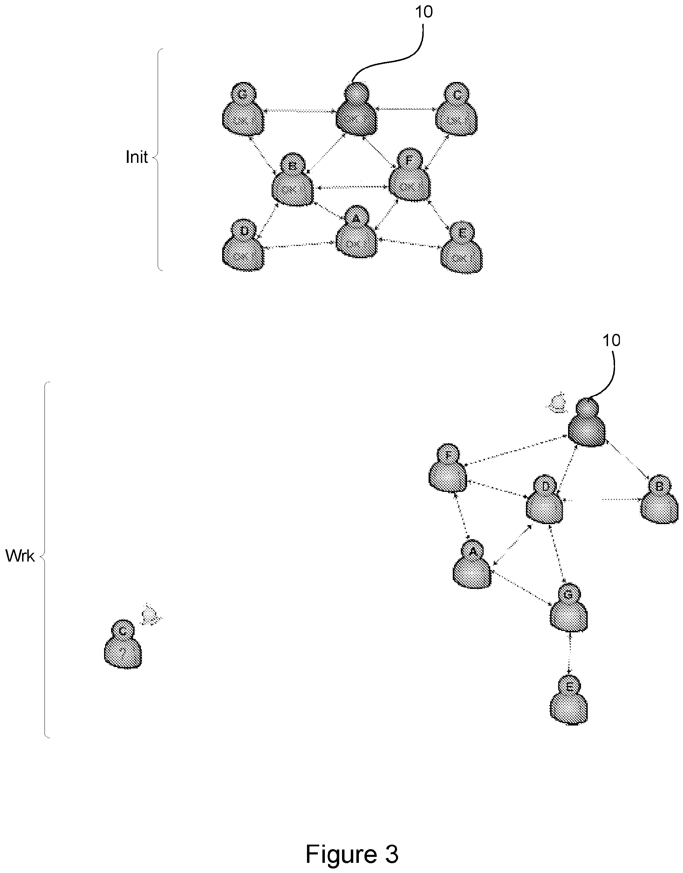

En terminologie Zigbee, cela revient à assigner un profil de type "Zigbee Coordinator" à l'accompagnateur 10 via l'application portée par son terminal de communication (phase « Init », figure 3). Cela lui confère le rôle de maître au sein du réseau qu'il constitue avec les autres membres du groupe. Ceux-ci sont réduits à un profil de type "Zigbee Router" qui consiste à relayer les informations reçues aux noeuds voisins.

Une fois les rôles configurés et les membres regroupés géographiquement, l'accompagnateur 10 active la fonction d'initialisation du réseau. Cette fonction a pour but de recenser les esclaves dont il a la charge. Cette initialisation permet de prendre connaissance :
- du nombre de modules esclaves à surveiller ;
- de l'identifiant (par exemple un numéro de téléphone dans le cas de d'un mobile équipé d'une carte SIM compatible Zigbee) de chacun d'entre eux. Il s'agit de l'identifiant d'entité. Cet identifiant est utilisé pour que le terminal puisse indiquer son identité lors des réponses aux requêtes d'obtention d'information de présence.

A l'issue de la phase d'initialisation, le terminal de l'accompagnateur affiche le nombre et l'identifiant de tous les terminaux suiveurs. De même, chaque terminal esclave affiche un message de confirmation de mise sous surveillance.

### 5.2.2 Eloignement d'un membre du groupe

En mode normal de fonctionnement (phase « Wrk », figure 3), l'applicatif du terminal accompagnateur 10 vérifie à intervalles réguliers (prédéterminé) la présence de tous les membres dans le groupe.

Selon l'invention, une telle vérification est réalisée par ramification, chaque membre du groupe participant à la surveillance des autres. Ainsi, l'invention s'adapte à toutes les topologies de groupe : le groupe peut être très étiré et le dernier membre du groupe peut être très éloigné du coordinateur tout en restant malgré tout considéré comme présent dans le groupe.

En effet, par ramification, un membre est considéré dans le groupe tant qu'un des ses voisins lui permet de rester dans la "grappe". Dès lors qu'un terminal suiveur ne reçoit plus de message de l'accompagnateur, il est considéré comme éloigné car hors de portée du réseau initialement constitué.

Au bout d'une durée d'éloignement (configurable par l'accompagnateur avant l'initialisation du système) d'un membre du groupe, l'accompagnateur et le visiteur distant sont notifiés sur leurs terminaux respectifs de l'événement. Prenant connaissance de l'information, le visiteur distancé peut chercher un membre du groupe en vue de le réintégrer et le cas échéant s'arrêter pour réduire son éloignement vis-à-vis du groupe.

Dans un mode de réalisation de l'invention, on tire encore parti du fait que les entités du groupe sont représentées par les terminaux mobiles des utilisateurs. En effet, lorsque l'entité coordinatrice détecte qu'une entité ne fait plus partie du groupe, elle active automatiquement un mode de rappel à l'entité en question. Ce mode de rappel peut prendre plusieurs formes. Dans une première variante, il est possible d'activer, sur le terminal un signal sonore ou visuel indiquant que l'entité est absente du groupe. Dans une deuxième variante, il est possible de prévoir l'envoi et la réception automatique d'un message, tel qu'un SMS (de l'anglais pour « Short Message Service »). Dans une troisième variante, il est possible d'initier une conversation téléphonique. Un appel peut être automatiquement établi entre l'entité coordinatrice et l'entité disparue. Ces trois variantes sont bien entendu combinables et peuvent être mises en oeuvre à des moments différents : un signal sonore et/ou visuel puis un message puis un appel téléphonique.

Dans un mode de réalisation de l'invention, la liste des entités du groupe et dont il est nécessaire d'assurer la surveillance est enregistrée dans une table. Cette table contient des informations de présence. Ces informations de présence peuvent être de manière très simple implémentées sous la forme d'un booléen. Ainsi, lorsqu'un terminal est considéré comme faisant partie du groupe, la valeur 1 sera affectée dans la table pour ce terminal. Lorsque le terminal est considéré comme ne faisant plus partie du groupe la valeur 0 sera affectée dans la table.

Dans un autre mode de réalisation de l'invention, les informations de présence peuvent être plus complètes qu'un simple booléen. En effet, les informations de présence peuvent prendre la forme d'une position géographique qui permettra au terminal coordinateur de déterminer la position géographique des différents terminaux composant le groupe. Ainsi le terminal coordinateur aura la possibilité d'afficher une topologie du groupe par exemple sur l'écran du terminal. Il sera ainsi très facile pour l'entité coordinatrice de déterminer où les membres de son groupe sont situés et pas uniquement d'avoir une information de présence ou d'absence des membres dans le groupe. Dans ce mode de réalisation l'entité coordinatrice peut, au moyen des informations que lui adressent les autres entités, localiser l'endroit ou se trouvait un des entités du groupe au moment ou elle l'a quitté.

Les informations de présence a caractère « géographique » peuvent être calculées par le terminal coordinateur en fonction du temps que la requête d'obtention d'informations présence met pour atteindre l'entité à surveiller. Cette information de présence peut également être obtenue en fonction du temps que la réponse à cette requête a mis pour parvenir à l'entité coordinatrice. L'information de présence peut également être obtenue en mixant les sources d'informations en provenance des entités. Par exemple, les terminaux actuels et notamment les terminaux de troisième génération, sont capables de déterminer leur position géographique. Une telle position est soit déterminée à l'aide de moyens de positionnement indépendant du protocole de communication utilisée dans le terminal soit déterminée en lien avec les équipements au auquel le terminal est connecté (stations de base par exemple). Dans un mode de réalisation, il est envisagé de récupérer la position géographique du terminal à l'aide des moyens de positionnement qu'il embarque et de fournir sa position géographique à l'application qui est chargée de communiquer avec l'entité coordinatrice.

On peut noter qu'il n'est pas nécessaire que tous les terminaux possèdent de telles capacités de localisation. En effet, il suffit que trois entités (trois terminaux) possèdent une telle capacité pour qu'il soit possible de déterminer la position géographique des autres terminaux en fonction des temps de réponse aux requêtes d'obtention d'informations présence.

Dans ce mode de réalisation de l'invention, la technologie « Zigbee » seule ne permet pas de déterminer la position géographique d'une entité. En effet, le mécanisme de détection de la position géographique d'une entité du groupe repose sur de la triangulation. Or la triangulation consiste à utiliser trois sources d'émission dont la position géographique est connue pour émettre des signaux à destination d'un quatrième élément à localiser. En fonction des temps de réponse de ces signaux et de leur comparaison selon la source, la position géographique du quatrième élément est déterminée. Il faut donc que la position géographique d'au moins trois entités du groupe soit connue pour utiliser ce procédé dans le but de localiser les autres membres du groupe. Le dispositif porté par les trois éléments en question peut être combiné à une technologie de localisation géographique telle que la 3G, le GPS, etc.

La topologie du groupe construite par une application dédiée, installée sur le terminal coordinateur, qui permet d'afficher une sorte de cartographie du groupe y compris lors de son déplacement.

Les informations de présence sont rafraîchies par cycle. Par exemple on peut estimer qu'une requête toutes les deux à cinq secondes permet tout à la fois d'économiser l'énergie nécessaire à l'émission de requêtes et à la réception de réponse de la part des terminaux tout en garantissant une bonne fiabilité de la surveillance. Il est également possible de paramétrer une valeur au-delà de laquelle on considère qu'un terminal ne fait plus partie du groupe. Une telle valeur peut par exemple correspondre à cinq cycles d'interrogation, soit environ trente secondes.

### 5.3 Autres caractéristiques optionnelles et avantages

Dans au moins un de ses modes de réalisation, l'invention concerne également un dispositif portatif qui comprend les moyens de création d'un réseau de communication permettant la gestion de groupes d'entités. Selon une caractéristique particulière de l'invention, un tel dispositif se présente sous la forme d'une carte à puce, par exemple de type Java, qui intègre un logiciel mettant en oeuvre le protocole défini par la norme précitée.

Une telle carte est à insérer au sein d'un terminal mobile de communication pour pouvoir créer avec d'autres terminaux mobiles proches un réseau de type « Zigbee ». Bien entendu, l'invention peut être mise en oeuvre par d'autres techniques. Ainsi il peut être envisagé de créer au sein de chaque terminal mobile une application qui prend en charge le procédé de l'invention, par exemple en envoyant et recevant des SMS (de l'anglais pour « Short Message Service »). Cette application pourra par exemple implémenter à la fois le protocole et la couche applicative qui permet la surveillance du groupe selon invention. Ainsi l'invention pourra être mise en oeuvre au sein d'une grande variété de terminaux sans qu'il soit nécessaire de procéder au remplacement des cartes à puce des utilisateurs.

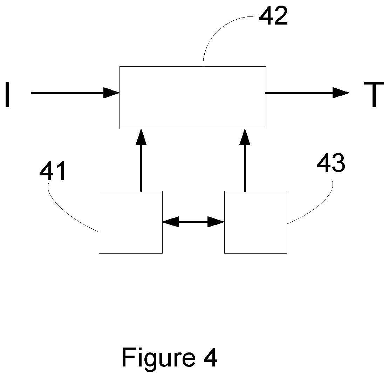

On présente, en relation avec la figure 4, une architecture simplifiée d'un dispositif de surveillance inclus dans un système de surveillance selon l'invention.

Un tel dispositif de surveillance comprend une mémoire 41, une unité de traitement 42 équipée par exemple d'un microprocesseur, et pilotée par le programme d'ordinateur 43, mettant en oeuvre le procédé selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée le requête d'obtention d'information de présences transmises sur le réseau de communication. Le microprocesseur de l'unité de traitement 42 met en oeuvre les étapes du procédé de surveillance, selon les instructions du programme d'ordinateur 41 pour relayer les requêtes aux dispositifs de surveillance qui ne l'on pas reçus. Pour cela, le dispositif de surveillance comprend, outre la mémoire 41, des moyens de réception des requêtes d'obtention d'informations de présence, des moyens de retransmission de ces requêtes à d'autres dispositifs de surveillance et des moyens de réponses et de retransmission de réponses aux requêtes. Ces moyens sont pilotés par le microprocesseur de l'unité de traitement 42.

## Revendications

1. Procédé de surveillance d'un ensemble d'entités formant un groupe, ledit groupe comprenant au moins une entité dite coordinatrice et au moins deux entités dites membres, lesdits au moins deux entités membres comprenant une première entité membre et une deuxième entité membre, ledit procédé étant **caractérisé en ce qu'**il comprend :
- une étape d'émission, de la part de ladite au moins une entité coordinatrice, d'au moins une requête d'obtention d'une information de présence, à destination de ladite première entité membre ;
- une étape de réception, par ladite première entité membre, de ladite au moins une requête d'obtention d'une information de présence ;
- au moins une étape de transmission par ladite première entité membre, vers ladite deuxième entité membre, de ladite au moins une requête d'obtention d'une information de présence ; et
- une étape de transmission, par ladite deuxième entité membre, à destination de ladite première entité membre, d'une réponse à ladite au moins une requête d'obtention ;
- une étape de retransmission de ladite réponse vers l'entité coordinatrice, par ladite première entité membre.

2. Procédé de surveillance selon la revendication 1, **caractérisé en ce qu'**il comprend en outre une étape de détection d'une absence de réponse de ladite deuxième entité membre par ladite entité coordinatrice.

3. Procédé de surveillance selon la revendication 1 **caractérisée en ce que** il comprend, préalablement à ladite étape d'émission:
- une phase de constitution dudit groupe au cours de laquelle chaque entité reçoit de la part de ladite entité coordinatrice un identifiant d'entité, et **en ce que** ladite réponse à ladite au moins une requête d'obtention comprend un identifiant d'entité de ladite deuxième entité membre.

4. Procédé selon la revendication 1 **caractérisé en ce que** ladite étape d'émission est mise en oeuvre à intervalles réguliers prédéterminés.

5. Procédé selon la revendication 2 et 4, **caractérisé en ce qu'**une entité membre dudit groupe est considérée comme ne faisant plus partie dudit groupe lorsqu'elle n'a pas transmis un nombre de réponses prédéterminé.

6. Procédé selon la revendication 1, **caractérisé en ce que** lesdites au moins deux entités membres et ladite au moins une entité coordinatrices dudit groupe sont des utilisateurs disposant d'un terminal de communication et **en ce que** lesdits terminaux de communications sont aptes à échanger lesdites requêtes d'obtention d'information de présence et lesdites réponses associées.

7. Procédé selon la revendication 6, **caractérisé en ce que** lorsqu'une entité membre dudit groupe est considérée comme ne faisant plus partie dudit groupe, ledit procédé comprend une étape de déclenchement d'un appel à destination du terminal de communication de ladite entité membre dudit groupe.

8. Système de surveillance d'un ensemble d'entités formant un groupe, ledit groupe comprenant au moins une entité dite coordinatrice et au moins deux entités dites membres, lesdites au moins deux entités membres comprenant une première entité membre et une deuxième entité membre, ledit système étant **caractérisé en ce qu'**il comprend :
- des moyens d'émission, par ladite au moins une entité coordinatrice, d'au moins une requête d'obtention d'une information de présence, à destination de ladite première entité membre ;
- des moyens de réception, par ladite première entité membre, de ladite au moins une requête d'obtention d'une information de présence ;
- des moyens de transmission par ladite première entité membre vers ladite deuxième entité membre, de ladite au moins une requête d'obtention d'une information de présence ;
- des moyens de transmission, par ladite deuxième entité membre, à destination de ladite première entité membre, d'une réponse à ladite au moins une requête d'obtention ; et
- des moyens de retransmission de ladite réponse vers l'entité coordinatrice, par ladite première entité membre.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de surveillance selon l'une au moins des revendications 1 à7, lorsqu'il est exécuté sur un ordinateur.

## Patentansprüche

1. Verfahren zum Überwachen einer Menge von eine Gruppe bildenden Einheiten, wobei die Gruppe wenigstens eine als Koordinator bezeichnete Einheit und wenigstens zwei als Mitglieder bezeichnete Einheiten umfasst, wobei die wenigstens zwei Mitgliedseinheiten eine erste Mitgliedseinheit und eine zweite Mitgliedseinheit umfassen, wobei das Verfahren **dadurch gekennzeichnet ist, dass** es umfasst:
- einen Schritt zum Senden von wenigstens einer Anforderung zum Erhalten einer Anwesenheitsinformation durch die wenigstens eine Koordinatoreinheit an die erste Mitgliedseinheit;
- einen Schritt zum Empfangen der wenigstens einen Anforderung zum Erhalten einer Anwesenheitsinformation durch die erste Mitgliedseinheit;
- wenigstens einen Schritt zum Übertragen der wenigstens einen Anforderung zum Erhalten einer Anwesenheitsinformation durch die erste Mitgliedseinheit an die zweite Mitgliedseinheit;
- einen Schritt zum Übertragen einer Antwort auf die wenigstens eine Anforderung zum Erhalten durch die zweite Mitgliedseinheit an die erste Mitgliedseinheit;
- einen Schritt zum Weiterübertragen der Antwort durch die erste Mitgliedseinheit an die Koordinatoreinheit.

2. Überwachungsverfahren nach Anspruch 1, **dadurch gekennzeichnet, dass** es ferner einen Schritt zum Erfassen eines Fehlens einer Antwort der zweiten Mitgliedseinheit durch die Koordinatoreinheit umfasst.

3. Überwachungsverfahren nach Anspruch 1, **dadurch gekennzeichnet, dass** es vor dem Sendeschritt umfasst:
- eine Phase des Aufbaus der Gruppe, in der jede Einheit von der Koordinatoreinheit eine Einheitenkennung empfängt, und dass die Antwort auf die wenigstens eine Anforderung zum Erhalten eine Einheitenkennung der zweiten Mitgliedseinheit umfasst.

4. Verfahren nach Anspruch 1, **dadurch gekennzeichnet, dass** der Sendeschritt in vorgegebenen regelmäßigen Intervallen erfolgt.

5. Verfahren nach Anspruch 2 und 4, **dadurch gekennzeichnet, dass** eine Mitgliedseinheit der Gruppe als nicht mehr Teil der Gruppe bildend betrachtet wird, wenn sie nicht eine vorgegebene Zahl von Antworten übertragen hat.

6. Verfahren nach Anspruch 1, **dadurch gekennzeichnet, dass** die wenigstens zwei Mitgliedseinheiten und die wenigstens eine Koordinatoreinheit der Gruppe über ein Kommunikationsendgerät verfügende Benutzer sind und dass die Kommunikationsendgeräte zum Austauschen der Anforderungen zum Erhalten einer Anwesenheitsinformation und der entsprechenden Antworten ausgebildet sind.

7. Verfahren nach Anspruch 6, **dadurch gekennzeichnet, dass**, wenn eine Mitgliedseinheit der Gruppe als nicht mehr Teil der Gruppe bildend betrachtet wird, das Verfahren einen Schritt zum Auslösen eines Aufrufs an das Kommunikationsendgerät der Mitgliedseinheit der Gruppe umfasst.

8. System zum Überwachen einer Menge von eine Gruppe bildenden Einheiten, wobei die Gruppe wenigstens eine als Koordinator bezeichnete Einheit und wenigstens zwei als Mitglieder bezeichnete Einheiten umfasst, wobei die wenigstens zwei Mitgliedseinheiten eine erste Mitgliedseinheit und eine zweite Mitgliedseinheit umfassen, wobei das System **dadurch gekennzeichnet ist, dass** es umfasst:
- Mittel zum Senden von wenigstens einer Anforderung zum Erhalten einer Anwesenheitsinformation durch die wenigstens eine Koordinatoreinheit an die erste Mitgliedseinheit;
- Mittel zum Empfangen der wenigstens einen Anforderung zum Erhalten einer Anwesenheitsinformation durch die erste Mitgliedseinheit;
- Mittel zum Übertragen der wenigstens einen Anforderung zum Erhalten einer Anwesenheitsinformation durch die erste Mitgliedseinheit an die zweite Mitgliedseinheit;
- Mittel zum Übertragen einer Antwort auf die wenigstens eine Anforderung zum Erhalten durch die zweite Mitgliedseinheit an die erste Mitgliedseinheit; und
- Mittel zum Weiterübertragen der Antwort durch die erste Mitgliedseinheit an die Koordinatoreinheit.

9. Von einem Kommunikationsnetz herunterladbares und/oder auf einem computerlesbaren Datenträger gespeichertes und/oder auf einem Mikroprozessor ausführbares Computerprogrammprodukt, **dadurch gekennzeichnet, dass** es Programmcodebefehle für das Ausführen des Überwachungsverfahrens nach wenigstens einem der Ansprüche 1 bis 7, wenn es auf einem Computer ausgeführt wird, umfasst.

## Claims

1. Method for monitoring a set of entities forming a group, said group comprising at least one entity termed coordinating entity and at least two entities termed member entities, said at least two member entities comprising a first member entity and a second member entity, said method being **characterized in that** it comprises:
- a step of sending, by said at least one coordinating entity to said first member entity, of at least one request to acquire an item of presence information;
- a step of reception, by said first member entity, of said at least one request to acquire an item of presence information;
- at least one step of transmission, by said first member entity to said second member entity, of said at least one request to acquire an item of presence information; and
- a step of transmission, by said second member entity to said first member entity, of a response to said at least one acquisition request;
- a step of retransmission, by said first member entity to the coordinating entity, of said response.

2. Monitoring method according to Claim 1, **characterized in that** it furthermore comprises a step of detection, by said coordinating entity, of a lack of response from said second member entity.

3. Monitoring method according to Claim 1, **characterized in that** it comprises, before said sending step:
- a phase of forming said group, during which phase each entity receives an entity identifier from said coordinating entity, and **in that** said response to said at least one acquisition request comprises an entity identifier of said second member entity.

4. Method according to Claim 1, **characterized in that** said sending step is implemented at predetermined regular intervals.

5. Method according to Claim 2 and 4, **characterized in that** a member entity of said group is considered to no longer be part of said group when it has not transmitted a predetermined number of responses.

6. Method according to Claim 1, **characterized in that** said at least two member entities and said at least one coordinating entity of said group are users having a communication terminal, and **in that** said communication terminals are able to exchange said requests to acquire presence information and said associated responses.

7. Method according to Claim 6, **characterized in that**, when a member entity of said group is considered to no longer be part of said group, said method comprises a step of triggering a call to the communication terminal of said member entity of said group.

8. System for monitoring a set of entities forming a group, said group comprising at least one entity termed coordinating entity and at least two entities termed member entities, said at least two member entities comprising a first member entity and a second member entity, said system being **characterized in that** it comprises:
- means for the sending, by said at least one coordinating entity to said first member entity, of at least one request to acquire an item of presence information;
- means for the reception, by said first member entity, of said at least one request to acquire an item of presence information;
- means for the transmission, by said first member entity to said second member entity, of said at least one request to acquire an item of presence information;
- means for the transmission, by said second member entity to said first member entity, of a response to said at least one acquisition request; and
- means for the retransmission, by said first member entity to the coordinating entity, of said response.

9. Computer program product downloadable from a communication network and/or stored on a computer-readable medium and/or able to be executed by a microprocessor, **characterized in that** it comprises program code instructions for executing the monitoring method according to at least one of Claims 1 to 7 when it is executed on a computer.
